(19) Europäisches Patentamt
European Patent Office
Office européen des brevets

(11) **EP 3 524 968 B1**

(12) **EUROPÄISCHE PATENTSCHRIFT**

(45) Veröffentlichungstag und Bekanntmachung des Hinweises auf die Patenterteilung:
**02.08.2023   Patentblatt 2023/31**

(51) Internationale Patentklassifikation (IPC):
**G01N 23/00** (2006.01)       **G01N 23/04** (2018.01)
**G01N 23/087** (2018.01)

(21) Anmeldenummer: **19155543.2**

(52) Gemeinsame Patentklassifikation (CPC):
**G01N 23/087; G01N 23/04;** G01N 2223/423

(22) Anmeldetag: **05.02.2019**

(54) **VERFAHREN UND VORRICHTUNG ZUM AUSWERTEN EINER MULTI-ENERGIE-RÖNTGEN-AUFNAHME MITTELS EINER BASISMATERIALZERLEGUNG**

METHOD AND DEVICE FOR EVALUATING A MULTI-ENERGY X-RAY IMAGE USING BASE MATERIAL DISASSEMBLY

PROCÉDÉ ET DISPOSITIF D'ÉVALUATION D'UNE IMAGERIE PAR RAYONS X MULTI-ÉNERGIE AU MOYEN DE LA DÉCOMPOSITION DU MATÉRIAU DE BASE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2018   DE 102018201967**

(43) Veröffentlichungstag der Anmeldung:
**14.08.2019   Patentblatt 2019/33**

(73) Patentinhaber: **Fraunhofer-Gesellschaft zur Förderung der angewandten Forschung e.V. 80686 München (DE)**

(72) Erfinder:
• **Firsching, Markus 90425 Nürnberg (DE)**
• **Ennen, Alexander 90763 Fürth (DE)**

(74) Vertreter: **Pfitzner, Hannes et al Schoppe, Zimmermann, Stöckeler Zinkler, Schenk & Partner mbB Patentanwälte Radlkoferstraße 2 81373 München (DE)**

(56) Entgegenhaltungen:
DE-A1-102009 017 615      US-A1- 2009 129 539

• **Markus Firsching ET AL: "Detection of Enclosed Diamonds using Dual Energy X-ray imaging", 18th World Conference on Nondestructive Testing, 20. April 2012 (2012-04-20), XP055604463, Gefunden im Internet: URL:https://www.ndt.net/article/wcndt2012/ papers/397_wcndtfinal00397.pdf [gefunden am 2019-07-10]**
• **L A Lehmann: "Generalized image combination in dual KVP digital radiography", Medical Physics, 1. Januar 1981 (1981-01-01), Seiten 659-667, XP055051090, DOI: 10.1118/1.595025 Gefunden im Internet: URL:http://scitation.aip.org/getpdf/servle t/GetPDFServlet?filetype=pdf&id=MPHYA60000 08000005000659000001&idtype=cvips&doi=10.1 118/1.595025&prog=normal [gefunden am 2013-01-24]**

EP 3 524 968 B1

**Beschreibung**

Ausführungsbeispiele der vorliegenden Erfindung beziehen sich auf ein Verfahren zur Auswertung einer Multi-Energie-Röntgen-Aufnahme mittels einer Basismaterialzerlegung. Weitere Ausführungsbeispiele beziehen sich auf eine entsprechende Vorrichtung.

Die Basismaterialzerlegung (BMD, Basis Material Decomposition) wird typischerweise unter Zuhilfenahme eines Dual-Energie-Verfahrens oder allgemein eines Multi-Energie-Verfahrens durchgeführt.

Bei der Dual-Energie-Sortierung, z.B. zur Detektion von Diamanten im Umgebungsgestein Kimberlit wird als Basismaterial Kohlenstoff und Aluminium verwendet. Da Diamanten hauptsächlich aus Kohlenstoff bestehen, ist die Wahl des ersten Basismaterials für die Algorithmik verhältnismäßig einfach. Das Umgebungsgestein, aus welchem Diamanten gefördert werden, Kimberlit, besteht hauptsächlich aus $SiO_z$, $MgO$ und $Al_2O_3$ und diversen Schwermetallkombinationen. Da die genaue Zusammensetzung jedes einzelnen Steins nicht bekannt ist, muss eine Approximation aller Kimberlitsteine gefunden werden. Mit manuellem Ausprobieren hat man herausgefunden, dass sich in manchen Fällen beispielsweise Aluminium als geeignete Näherung eignet. Initial ist dies aus der Zusammensetzung des Gesteins jedoch nicht ersichtlich. Die verwendeten Basismaterialien können also erheblich von den enthaltenen Materialien abweichen. Ein Beispiel für Dual-Energie Erkennung von Diamanten in Gestein wird in Markus Firsching et al. ("Detection of Enclosed Diamonds using Dual Energy X-ray imaging",18th World Conference on Nondestructive Testing, 20. April 2012) beschrieben.

Die Dual-Energie-Röntgen-Algorithmik der Basismaterialzerlegung erhält typischerweise als Input für die Algorithmik zwei Basismaterialien bzw. insbesondere zwei Referenzwerte B1 und B2 zugeordnet zu gesuchten Basismaterialien, um auf Basis von zwei, bei unterschiedlichen Spektralparametern aufgenommenen Röntgenprojektionen, die Verteilung der beiden Basismaterialien in den Projektionen berechnen zu können. Als Basismaterial versteht man dabei die Definition des Materials bzw. insbesondere dessen Kernladungszahl Z oder auch dessen effektive Ordnungszahl bei Verbindungen und Gemischen. Diese Kernladungszahlen bzw. die effektiven Ordnungszahlen B1 und B2 dienen also als Inputparameter für die Algorithmik. Das Ergebnis der Algorithmik sind z.B. zwei Basismaterialbilder, wobei als Basismaterialbild ein aus der Basismaterialzerlegung resultierendes Bild bezüglich eines der verwendeten Basismaterialien zu verstehen ist.

Für die Algorithmik wäre es ideal, wenn das durchstrahlte Material (Z1, Z2) ausschließlich aus den beiden in die Algorithmik einfließenden Basismaterialien B1 und B2 bestehen würde. Dann erscheint das erste Material nur in dem zu diesem ersten Basismaterial gehörenden ersten Basismaterialbild, während das zweite Material nur in dem zu dem zweiten Basismaterial gehörenden Basismaterialbild auftaucht. In der Realität besteht das reale Material jedoch aus verschiedenen Materialien mit unbekannter Zusammensetzung. Dies führt dazu, dass bei realen Anwendungen in z. B. der Sortierung oder bei dem Recycling die für die Algorithmik eingesetzten Basismaterialien geschätzt oder approximiert werden müssen. Hierbei entstehen Fehler in der Auswahl der Basismaterialien, die dann im Resultat zu schlechten Ergebnissen bei der Auswertung führen. Schlechte Ergebnisse sind anhand sogenannten Geisterbildern ersichtlich, wobei als Geisterbild das Vorkommen von Material 1 im Basismaterialbild 2 und umgekehrt bezeichnet wird.

Da es aktuell keine Vorgehensweise gibt, geeignete Basismaterialien für die bestehenden Materialproben zu definieren, werden diese entweder durch alternative Messmethoden approximiert oder schlicht durch Testen von verschiedenen Kombinationen von Basismaterialien durch visuelle Inspektionen der Ergebnisse ermittelt. Diese Prozedur ist zum einen sehr subjektiv und zum anderen zeitaufwendig. Sie erfordert weiterhin ein hohes Maß an Hintergrundwissen und Erfahrung und kann nur von geschultem Personal angewendet werden. Deshalb besteht der Bedarf nach einem verbesserten Ansatz.

Aufgabe der vorliegenden Erfindung ist es, ein automatisierbares Konzept zu schaffen, mittels welchem die Referenzwerte zugeordnet zu den Basismaterialien systematisch ausgewählt werden können.

Die Aufgabe wird durch den Gegenstand der unabhängigen Patentansprüche gelöst.

Ausführungsbeispiele der vorliegenden Erfindung schaffen ein Verfahren zum Auswerten einer Multi-Energie-Röntgen-Aufnahme (im einfachsten Fall einer Dual-Energie-Röntgen-Aufnahme) mittels der Basismaterialzerlegung BMD. Das Verfahren umfasst die vier Basisschritte a) bis d):

a) Erhalten einer (z.B. zweidimensionalen) Multi-Energie-Röntgen-Aufnahme eines Materials, umfassend einen ersten (zusammengehörenden) Materialbereich zugehörig zu einem ersten Material und einen zweiten (zusammengehörenden) Materialbereich zugehörig zu einem zweiten Material;

b) Verarbeiten der (zweidimensionalen) Multi-Energie-Röntgen-Aufnahme durch bereichsweise Vergleichen der gemessenen Durchstrahlungswerte (erster Bereich in der 2D-Multi-Energie-Röntgen-Aufnahme resultierend aus der Durchstrahlung des ersten Materialbereichs und zweiter Bereich in der 2D-Multi-Energie-Röntgen-Aufnahme resultierend aus der Durchstrahlung des zweiten Materialbereichs) mit mindestens einem ersten Referenzwert für ein erstes Basismaterial und einem zweiten Referenzwert für ein zweites Basismaterial, , um eine erste Darstellung für die Bereiche kennzeichnend das erste Basismaterial und eine zweite Darstellung für die Bereiche kennzeichnend das zweite Basismaterial zu erhalten;

c) Auswerten der ersten Darstellung hinsichtlich einer Ausprägung eines ersten Bereichs resultierend aus der Durchstrahlung des ersten Materialbereichs und hinsichtlich einer Ausprägung eines zweiten Bereichs resultierend aus der Durchstrahlung des zweiten Materialbereichs; und

d) Auswerten der zweiten Darstellung hinsichtlich der Ausprägung eines zweiten Bereichs resultierend aus der Durchstrahlung des zweiten Materialbereichs und hinsichtlich der Ausprägung eines ersten Bereichs resultierend aus der Durchstrahlung des ersten Materialbereichs;

Diese Schritte b) bis d) werden mit variierten ersten und/oder mit variierten zweiten Referenzwerten B1' und B2' für andere erste und/oder andere zweite Basismaterialien wiederholt, um weitere erste und weitere zweite Darstellungen zu erhalten. Hierbei erfolgt dann die Auswertung solange, bis die Ausprägung des zweiten Bereichs in den weiteren ersten Darstellungen und/oder bis die Ausprägung des ersten Bereichs in den weiteren zweiten Darstellungen minimal oder betragsmäßig minimal ist.

Entsprechend Ausführungsbeispielen ist das Ergebnis des Schrittes des Wiederholens eine Identifikation des ersten Materialbereichs entsprechend einem ersten Basismaterial bzw. eine Identifikation des zweiten Materialbereichs entsprechend dem zweiten Basismaterial, was im Umkehrschluss nichts anderes bedeutet, als dass eine Zuordnung des ersten Materials zu einem ersten Basismaterial und/oder eine Zuordnung des zweiten Materials zu einem zweiten Basismaterial erfolgt ist.

Ausführungsbeispiele der vorliegenden Erfindung basieren auf der Erkenntnis, dass die Basismaterialzerlegung als Ausgabe der Algorithmik zwei Projektionen (Basismaterialbilder) liefert, welche auf dem gewählten Basismaterial basieren und die Wahl der zumindest zwei Basismaterialen systematisiert erfolgen kann. Diese Basismaterialbilder tragen die Dichte der gewählten Basismaterialien entlang des Durchstrahlungswegs auf. Bei ideal verwendeten Basismaterialien wird das jeweils andere Material im Basismaterialbild nicht abgebildet. Das heißt also, dass das Material 1 (z. B. Z1) nur im Basismaterialbild 1 zu sehen ist, während das Basismaterial 2 (z. B. Z2) nur im Basismaterialbild 2 zu sehen ist. Dies geht natürlich nur, wenn die Basismaterialien ideal gewählt sind. Wenn die Basismaterialien nicht ideal gewählt worden sind oder nicht ideal gewählt werden können (da z. B. das Material über die Probe hinweg verschieden ist) zeichnen sich die Materialien noch in den jeweiligen anderen Basismaterialbildern ab, wobei ein sog. Geisterbild entsteht. Ausführungsbeispiele der vorliegenden Erfindung machen sich diese Erkenntnis dahingehend zunutze, dass ausgehend hiervon eine Minimierung erfolgen kann, so dass die sogenannten "Geisterbilder" (Vorkommen von Material 1 im Basismaterialbild 2 und umgekehrt) in den Basismaterialbildern minimiert werden. Dieser Ansatz hat den Vorteil, dass so systematisch unterschiedliche Basismaterialkombinationen B1 und B2 durchprobiert werden können, bis ein minimales Ergebnis (minimale Ausprägung von Geisterbildern in den Basismaterialbildern) erreicht wird. Wenn das Minimum erreicht ist, ist B1 und B2 so gewählt, dass sie dem realen Z1 und Z2 der untersuchten Probe entsprechen.

Hier kann beispielsweise dann der jeweils gefundene erste Referenzwert oder die Kombination der ersten und zweiten Referenzwerte, zu welchem die Ausprägung kennzeichnend das zweite Basismaterial minimal oder betragsmäßig minimal ist, als Ergebnis ausgegeben werden. Umgekehrt wird selbstverständlich auch der zweite Referenzwert bzw. die Kombination des ersten und zweiten Referenzwerts, zu welchem die Ausprägung kennzeichnend das erste Basismaterial minimal oder betragsmäßig minimal ist, als Ergebnis ausgeben werden.

Entsprechend weiteren Ausführungsbeispielen kann beim Auswerten der ersten Darstellung bzw. der weiteren ersten Darstellungen sowie beim Auswerten der zweiten Darstellung bzw. der weiteren zweiten Darstellungen jeweils ein Faktor ermittelt werden, der Auskunft über ein Vorliegen und/oder eine Ausprägung des Bereichs kennzeichnend das zweite Basismaterial in der ersten oder der weiteren ersten Darstellung bzw. über ein Vorliegen oder einen Ausprägungsgrad des Bereichs kennzeichnend das erste Basismaterial in der zweiten oder der weiteren zweiten Darstellung gibt. Anhand dieses Faktors kann die Minimierung durchgeführt werden. Weiter ist es anhand dieses Faktors möglich, den Variationsgrad der weiteren ersten bzw. weiteren zweiten Referenzwerte zu bestimmen. Entsprechend weiteren Ausführungsbeispielen kann beim Auswerten der ersten bzw. der weiteren ersten sowie der zweiten bzw. weiteren zweiten Darstellungen die Ausprägung bewertet werden. Beispielsweise wird die Ausprägung kennzeichnend / zugeordnet zum zweiten Basismaterial in den ersten Darstellungen mit einem Faktor von -x bis +x (entspricht "Geisterbild" im B1 Bild) bewertet, während die Ausprägung des Bereichs kennzeichnend / zugeordnet zu dem ersten Basismaterial in den zweiten Darstellungen mit einem Faktor von -y bis +y (entspricht "Geisterbild" im B2 Bild) bewertet wird. Das Vorzeichen gibt Auskunft, in welche Richtung der Referenzwert variiert werden muss. Hierbei wird der erste Referenzwert B1 in Richtung eines Basismaterials mit einer höheren Ordnungszahl variiert, wenn das Vorzeichen von y negativ ist und in Richtung eines Basismaterials mit einer niedrigen Ordnungszahl, wenn das Vorzeichen von y positiv ist. Analog hierzu wird der zweite Referenzwert B2 in Richtung eines Basismaterials mit einer höheren Ordnungszahl variiert, wenn das Vorzeichen von x negativ ist und in Richtung eines Basismaterials mit einer niedrigen Ordnungszahl, wenn das Vorzeichen von x positiv ist. Zusätzlich kann entsprechend weiteren Ausführungsbeispielen auch der Variationsbetrag in Abhängigkeit von dem Betrag der Faktoren -x, x, -y und y erfolgen. In anderen Worten ausgedrückt heißt das, dass die Variation in Abhängigkeit von der Bewertung erfolgt.

Das Variieren der Referenzwerte B1', B2' kann entsprechend Ausführungsbeispielen entweder anhand einer vordefinierten Vielzahl von ersten und zweiten Referenzwerten oder anhand einer vordefinierten Wiederholungszahl erfolgen. Zusätzlich wäre es entsprechend weiteren Ausführungsbeispielen auch denkbar, dass das Variieren während einer realen Messung erfolgt, um die für die Messung verwendeten Referenzwerte für das erste und das zweite Basismaterial nachzuführen.

Entsprechend weiteren Ausführungsbeispielen umfasst das Verfahren nicht nur das Auswerten, sondern auch die eigentliche Multi-Energie-Röntgen-Aufnahme (mit zumindest zwei Energien).

Ein weiteres Ausführungsbeispiel bezieht sich auf eine Vorrichtung zur Auswertung einer Multi-Energie-Röntgen-Aufnahme mittels einer Basismaterialzerlegung. Die Vorrichtung umfasst zumindest eine Schnittstelle zum Empfangen der Multi-Energie-Röntgen-Aufnahme sowie einen Prozessor zum Auswerten. Ein weiteres Ausführungsbeispiel bezieht sich auf ein Röntgensystem mit einer Röntgenquelle, einem Röntgendetektor sowie einer Vorrichtung zum Auswerten.

Die Vorrichtung kann auch in Software implementiert sein, so dass sich ein weiteres Ausführungsbeispiel auf ein Computerprogramm zum Durchführen des Verfahrens bezieht, wenn das Verfahren auf einem Computer abläuft. Weiterbildungen sind in den Unteransprüchen definiert. Ausführungsbeispiele der vorliegenden Erfindung werden anhand der beiliegenden Zeichnungen im Detail erläutert. Es zeigen:

Fig. 1 ein schematisches Flussdiagramm zur Illustration des Auswerteverfahrens nach einem Basisausführungsbeispiel.

Fig. 2 eine Tabelle zur Illustration eines iterativen Auswerteansatzes gemäß erweiterten Ausführungsbeispielen; und

Fig. 3 eine schematische Darstellung einer Röntgenanlage mit einer Auswerteeinheit gemäß einem Ausführungsbeispiel.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

Bevor nun der Ansatz zur Ermittlung der Referenzwerte für die Basismaterialien im Detail erläutert wird, wird nachfolgend kurz die Basismaterialzerlegung als solche diskutiert.

Die Basismaterialzerlegung ist eine quantitative Methode zur Bestimmung der Anteile der (bekannten) Basismaterialien in einem Objekt mit Hilfe von Röntgenstrahlung. Dabei nutzt man aus, dass verschiedene Materialien verschiedene, von der Energie abhängige Schwächungskoeffizienten $\mu$ haben. Für eine scharfe Photonenenergie ist die Intensität I nach einem Objekt mit dem Massenschwächungskoeffizient $\mu'$ und der Flächendichte a nach dem Lambert-Beer'sche Gesetz

$$I = I_0 * \exp(-\mu' a)$$

$$E = \ln \frac{I_0}{I} = \mu' a$$

wobei $I_0$ die ungeschwächte Intensität und E die Extinktion ist. Liegen mehrere Materialien (indiziert mit j) übereinander, so addieren sich die Schwächungskoeffizienten im Exponent. Messungen bei verschiedenen Energien (indiziert mit k) ergeben nun einen Satz von Gleichungen:

$$I_k = I_{0k} * \exp(-\mu'_{jk} a_j)$$
$$E_k = \mu'_{jk} a_j$$

Dieses lineare Gleichungssystem ist unter gewissen Voraussetzungen lösbar und liefert die Flächendichten $a_j$ der (als bekannt vorausgesetzten) Basismaterialien.

Da monoenergetische Röntgenquellen in der Praxis aufwändig, teuer und/oder gefährlich sind (Synchrotron, radioaktive Präparate etc.) wurde die Methode für Quellen mit breitem Spektrum angepasst.

Sind Spektrum S(E) und Detektoreffizienz D(E) in Abhängigkeit von der Energie bekannt, kann man die Intensität, die der Detektor ermittelt, berechnen:

$$I_0 = \int dE \, S(E) \, D(E)$$

Die ermittelte Intensität hinter einem schwächenden Objekt ist analog:

$$I = \int dE \, \exp(\mu'(E)a) \, S(E) \, D(E)$$

Daraus lässt sich für verschiedene Spektren S(E) / Detektoreffizienzen D(E) über die Extinktion E ein effektiver Schwächungskoeffizient in Anhängigkeit von der Flächendichte a berechnen.

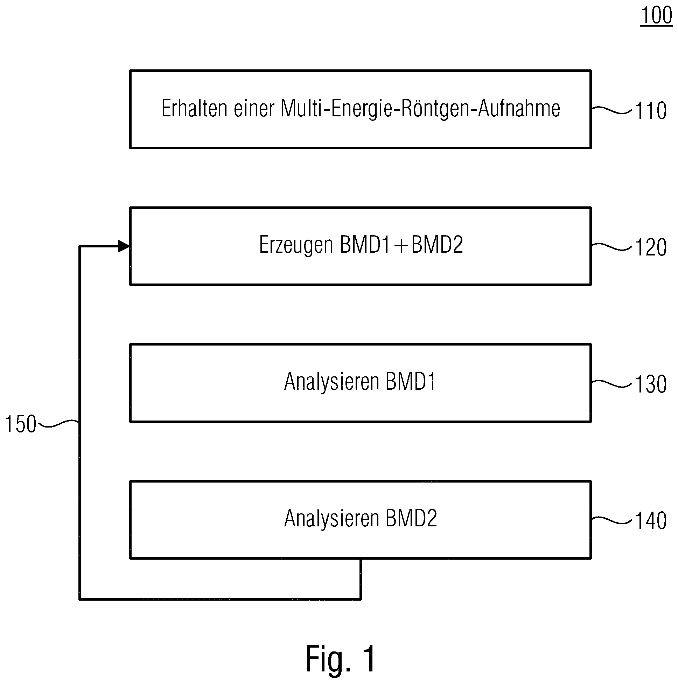

Ausgehend von dieser Basismaterialzerlegung ist es häufig, wie bereits eingangs erwähnt, das Problem, dass die gewählten Basismaterialien bzw. insbesondere die Referenzwerte B1 und B2 zugeordnet zu den Basismaterialien entsprechend den Ordnungszahlen bzw. den effektiven Ordnungszahlen Z1 und Z2 nicht 100% richtig gewählt sind, um hier diese zumindest zwei Referenzwerte für die zumindest zwei Basismaterialien (optional auch mehr als zwei Referenzwerte für mehr als zwei Basismaterialien) zu wählen, wird das Verfahren 100, das in Fig. 1 dargestellt ist, verwendet. Das Verfahren 100 umfasst die vier Basisschritte 110, 120, 130 und 140. Zusätzlich umfasst das Verfahren 100 noch den optionalen Schritt 105, der dem Schritt 110 vorgelagert ist. Im Schritt 105 werden Röntgenaufnahmen bevorzugt mit zumindest zwei unterschiedlichen Strahlungsenergien (Dual-Energie-Röntgentechnik) oder auch mit mehr als zwei Strahlungsenergien (Multi-Energie-Röntgentechnik) genommen. Da die Basismaterialzerlegung Anwendungen bei der Materialsortierung bzw. bei dem Recycling findet, sei an dieser Stelle angemerkt, dass das durchleuchtete Objekt bzw. Material typischerweise eine Materialmasse, wie z. B. ein abgebautes Bodenmaterial (Umgebungsgestein mit Erz) mit zwei Materialanteilen ist. Diese zwei Materialanteile kommen in Summe als Materialbereiche vor, wobei die Teilvolumina in dem Gesamtvolumen nebeneinander vorkommen.

Der erste Materialanteil kann das Gestein sein, während der zweite Materialanteil ein abzubauendes Metall, wie z. B. ein Erz umfasst. Um nun mittels der Dual-/Multi-Energie-Röntgentechnik die Materialien zu sortieren, werden zwei Basismaterialien bzw. aus technischer Sicht zwei Referenzwerte zugeordnet zu den zwei Basismaterialien definiert, die den in dem Umgebungsgestein enthaltenen Materialien möglichst nahekommen. Diese definierten Materialien dienen als Startwerte, in welchen die Schritte 110 bis 140 durchgeführt werden.

Im Schritt 110 werden die genommenen Bilder an die Auswerteeinheit übergeben. Der Schritt 110 bezieht sich auf das Erhalten einer Multi-Energie-Röntgen-Aufnahme, eines Materials (des Materials), umfassend einen ersten Materialbereich zugehörig zu dem ersten Material und einen zweiten Materialbereich zugehörig zu dem zweiten Material.

Im Schritt 120 wird nun, wie oben erläutert, die Multi-Energie-Röntgen-Aufnahme entsprechend der Basismaterialzerlegung verarbeitet. Im Kern erfolgt hier ein Vergleichen der je Bereich bei der Durchstrahlung des Materials erhaltenen Durchstrahlungswert zumindest mit einem ersten und einem zweiten Referenzwert, wobei der erste Referenzwert eben dem ersten Basismaterial und der zweite Referenzwert dem zweiten Basismaterial zugeordnet ist. Das Ziel dieses Vergleichs ist es, zwei Basismaterialbilder bzw. allgemein gesprochen zwei Darstellungen zu erhalten.

Ein Basismaterialbild ist ein aus der Basismaterialzerlegung resultierendes Bild bezüglich eines der verwendeten Basismaterialien. Besteht beispielsweise eine Probe aus zwei verschiedenen Materialien, welche dann die Basismaterialien sein sollten, dann erscheint das erste Material nur in dem zu diesem ersten Basismaterial gehörenden ersten Basismaterialbild, während das zweite Material nur in dem zu dem zweiten Basismaterial gehörenden Basismaterialbild auftaucht. Sollten die Basismaterialien/Referenzwerte B1, B2 nicht optimal gewählt sein, kommt es zu sogenannten Geisterbildern. Als Geisterbild wird das Vorkommen von Material 1 im Basismaterialbild 2 und umgekehrt bezeichnet. Bei diesem Schritt 120 werden also zumindest zwei Darstellungen generiert, wobei die erste Darstellung im Optimalfall Bereiche zugehörig zu dem ersten Basismaterial umfasst und die zweite Darstellung Bereiche (zu den ersten Bereichen unterschiedliche Bereiche) zugehörig zu dem zweiten Basismaterial. Wenn die Basismaterialien nicht optimal gewählt sind, erscheint in der zweiten Darstellung eine Ausprägung des Bereichs kennzeichnend das erste Basismaterial und/oder in der ersten Darstellung eine Ausprägung des Bereichs kennzeichnend das zweite Basismaterial. Diese Ausprägung wird als Geisterbild bezeichnet, wobei nun im Schritt 130 und 140 diese Ausprägungen analysiert werden.

Im Schritt 130 erfolgt das Auswerten der ersten Basismaterialdarstellung hinsichtlich einer Ausprägung eines ersten Bereichs resultierend aus der Durchstrahlung des ersten Materialbereichs und hinsichtlich einer Ausprägung eines Bereichs resultierend aus der Durchstrahlung des zweiten Materialbereichs (Geisterbild). Im Schritt 140 erfolgt analog hierzu das Auswerten der zweiten Basismaterialdarstellung hinsichtlich der Ausprägung eines zweiten Bereichs resultierend aus der Durchstrahlung des zweiten Materialbereichs und hinsichtlich der Ausprägung eines ersten Bereichs resultierend aus der Durchstrahlung des ersten Materialbereichs (Geisterbild). Umso stärker die zweite Ausprägung/das zweite Geisterbild in der ersten Darstellung und/oder die erste Ausprägung/ das erste Geisterbild in der zweiten Darstellung ist, umso weiter ist der Referenzwert zugeordnet zu den Basismaterialien 1 und 2 von dem Optimum entfernt.

Nun werden in einem iterativen Vorgang die Schritte 120, 130 und 140 mit variierten ersten und variierten zweiten Referenzwerten B1', B2' zugeordnet zu anderen ersten und anderen zweiten Basismaterialien wiederholt, um weitere erste und weitere zweite Darstellungen zu erhalten und auszuwerten. Dieses Wiederholen erfolgt solange, bis die Ausprägung des zweiten Bereichs in den weiteren ersten Darstellungen und/oder bis die Ausprägung des ersten Bereichs in den weiteren zweiten Darstellungen minimal oder betragsmäßig minimal ist. Dieses Wiederholen ist anhand der Iterationsschleife mit dem Bezugszeichen 150 illustriert. Die jeweilige Ausprägung, d. h. also die Stärke des Auftretens des ersten bzw. zweiten Bereichs im jeweils anderen Basismaterialbild kann als Gütemaß für die gewählten Basismaterialien gesehen werden. Ziel ist es, anhand von Kalibrieraufnahmen von Proben mit bekannten Materialien, diese fälschlichen Abbildungen zu minimieren und somit die Güte des gewählten Basismaterials zu maximieren. Dies kann realisiert werden, indem die Summen der Absolutbeträge in den Basismaterialbildern für das jeweils andere Material betrachtet und durch die Auswahl anderer Basismaterialien möglichst gering (möglichst nahe an null) gehalten werden.

Zur Bestimmung der zu testenden Basismaterialien gibt es entsprechend Ausführungsbeispielen zwei Ansätze.

1. Brute Force:

Alle möglichen Materialkombinationen, d.h. alle chemischen Elemente, werden gegeneinander als Basismaterial verwendet. Es ist ebenfalls denkbar sich hierbei nicht nur auf chemische Elemente zu beschränken, sondern ebenfalls chemische Verbindungen in die möglichen Materialkombinationen einfließen zu lassen, dadurch steigt die Zahl der möglichen Kombinationen noch weiter an, was die Berechnungsdauer weiter vergrößert.

Es wird in den Basismaterialbildern nur überprüft, bei welcher Kombination von B1 und B2 die Geisterbilder am geringsten sind.

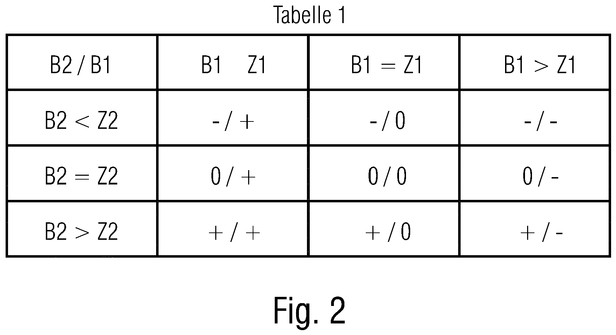

2. Iterative Herleitung des tatsächlichen Basismaterialbereiches: Anhand der zugrundeliegenden Physik der Abschwächung der Röntgenstrahlung kann festgestellt werden, ob ein Basismaterial mit höherer oder niedrigerer Ordnungszahl (bei Elementen) bzw. effektiver Ordnungszahl (bei chem. Verbindungen und Gemischen) verwendet werden muss. Dazu wird analysiert, ob der bekannte Teil der Probe, der aus einem Material besteht, in dem jeweils anderen Basismaterialbild als "Geisterbild" auftaucht und wenn ja wie stark und mit welchem Vorzeichen. Dazu sind grundsätzlich neun Fälle zu unterscheiden, aus denen abgeleitet werden kann wie die Wahl der Basismaterialien angepasst werden sollte. Die in Fig. 2 dargestellte Tabelle zeigt die Vorzeichen der Geisterbilder. Die Tabelle zeigt die Vorzeichen der Geisterbilder, das erste zeigt das Vorzeichen im Basismaterialbild zu B1 an Stellen im Bild, in denen kein Z1 vorhanden ist, sondern nur Z2 und das zweite zeigt das Vorzeichen im Basismaterialbild zu B2 an Stellen im Bild, in denen kein Z2 vorhanden ist, sondern nur Z1. Null bedeutet, dass kein Geisterbild auftritt. Es wird zudem angenommen, dass B1 > B2. Sind geeignete Bereiche im Bild der Probe vorhanden, kann unmittelbar festgestellt werden, in welche Richtung B1 und B2 angepasst werden müssen. Ist zudem die abgebildete Flächendichte (Dichte mal durchstrahlte Länge) der Probe bekannt, kann mit Hilfe einer einmaligen Kalibrierung mit einer genügend großen Anzahl an Kalibrierproben bekannter Flächendichte nicht nur die Richtung (größer oder kleiner) der Anpassung von B1 und/oder B2 berechnet werden, sondern auch die Entfernung zum passenden Basismaterial bzw. der passende Anpassungsbetrag des Referenzwertes bestimmt werden. Dadurch ist es möglich, mit wenigen Iterationsschritten die passende Kombination von B1 und B2 zu finden.

Zur Realisierung der Methode in einer Sortieranlage kann folgendermaßen vorgegangen werden. Das "gut" und "schlecht" Material werden nacheinander über das Förderband in die Röntgeneinheit eines Sortierers gefördert und mit Dual-Energie-Röntgentechnik aufgenommen. Hierbei entspricht das "gut" Material einem bekannten und gesuchten (wertvollen) Material, das "schlecht" Material entspricht z.B. dem umgebenden Gestein oder wertlosen Materialien. (Alternativ können die Proben auch gemischt auf den Röntgenprojektionen vorkommen - es muss dann jedoch eine Zuweisung stattfinden, welche Proben in der Röntgenprojektion dem gesuchten Material entsprechen und welche unbekannt sind). Im nachfolgenden Schritt wird nun durch die skizzierte Methode, anhand der aufgenommenen Daten, die optimale Kombination der Basismaterialien bestimmt. Es wäre weiterhin denkbar, dass sich das System an eine Veränderung des "schlecht"-Materials anpasst, dies ist möglich solange das "gut" Material einwandfrei identifizierbar bzw. erkennbar ist. Eine mögliche Anwendung für dieses Verfahren ist die Materialbestimmung im Zusammenhang mit Hochöfen, um Materialen, z.B. bestimmte Stähle zu identifizieren. Es werden Röntgenaufnahmen angefertigt, welche eindeutig identifizierbaren Materialien (in möglichst reiner Form) beinhalten. Werden nun zusätzlich Röntgenaufnahmen angefertigt, welche eine repräsentative Schnittmenge abbilden, können geeignete Basismaterialien gefunden werden, ohne die Inhaltsstoffe des untersuchten Materials genauer charakterisieren zu müssen. Im laufenden Betrieb einer Sortieranlage könnte die Methode dauerhaft eingesetzt werden, um sich beispielhaft an eine schwankende Materialkombination anzupassen. Somit müsste die Arbeit des Geräts nicht unterbrochen werden, um neu kalibriert zu werden.

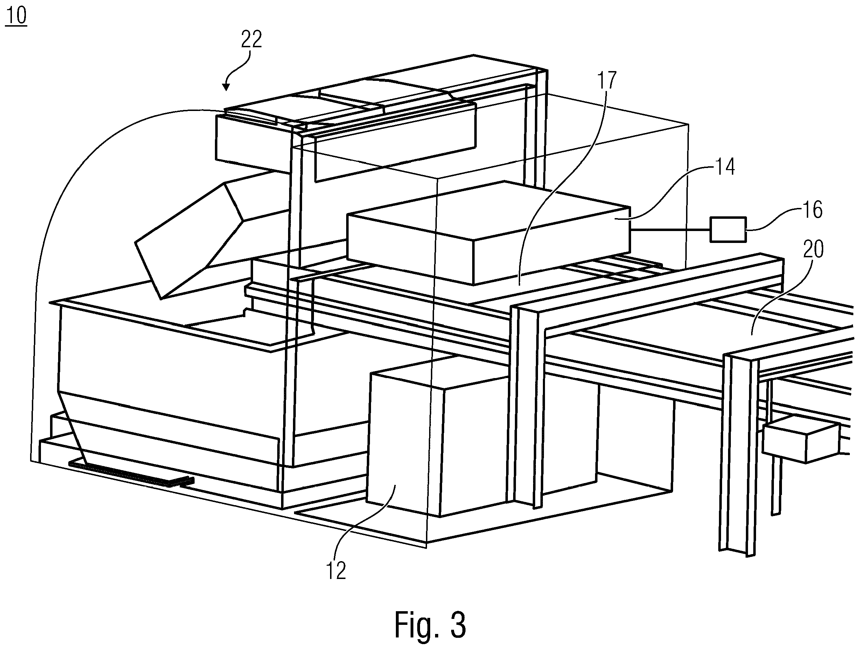

Fig. 3 zeigt eine Röntgenanlage 10 mit einer Strahlungsquelle 12, einem Strahlungsdetektor 14 und einem dazwischen angeordneten Förderband 16, das das zu durchstrahlende Material (Objektvolumen) durch den Durchstrahlungsbereich 17 führt. Mit dem Detektor 14 ist die Auswerteeinrichtung 20 verbunden, die die oben erläuterte Auswertung durchführt. Das Röntgensystem 10 ist mit einer Materialsortiereinheit 22 verbunden, die in Abhängigkeit von den detektierten Materialien (Detektion erfolgt mit der Auswerteeinrichtung 20) die Materialsortierung durchführt.

An dieser Stelle sei angemerkt, dass diese Auswerteeinheit 20 im Wesentlichen eine Eingangsschnittstelle zum Empfangen der Durchstrahlungsaufnahmen und einen Prozessor zu der Auswertealgorithmik umfasst.

Bezüglich des Ausführungsbeispiels aus Fig. 1 sei angemerkt, dass hier entsprechend eine Ausprägung als Maß für die Ausprägung die Summe der Absolutbeträge zugeordnet zu einem der Basismaterialien verwendet wurde, wobei entsprechend weiteren Ausführungsbeispielen auch ein anderes Maß als Qualitätskriterium genutzt werden kann.

Angewendet wird die Methode sowohl im Bereich der industriellen Röntgensortierung mit Dual-Energie, z.B. in den Bereichen Sortierung, Bergbau und Rohstoffgewinnung sowie in der Lebensmittelsortierung. Bisher ist zum Einlernen dieser Geräte ein hohes Maß an technischem Verständnis notwendig. Durch die vorgestellte Methodik kann dies - zumindest teilweise - abgebildet werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.  Computer-implementiertes Verfahren (100) zum Auswerten einer Multi-Energy-Röntgen-Aufnahme bei der Materialsortierung mittels einer Basismaterialzerlegung:

    a) Erhalten (110) einer Multi-Energy-Röntgen-Aufnahme eins Materials, umfassend einen ersten Materialbereich zugehörig zu einem ersten Material und einen zweiten Materialbereich zugehörig zu einem zweiten Material; wobei der ersten Materialbereich und der zweite ersten Materialbereich nebeneinander vorkommen, wobei in der Multi-Energy-Röntgen-Aufnahme ein erster Bereich aus der Durchstrahlung des ersten Materialbereichs resultiert und ein zweiter Bereich aus der Durchstrahlung des zweiten Materialbereichs resultiert;

    b) Verarbeiten (120) der Multi-Energy-Röntgen-Aufnahme mit bei der Durchstrahlung des Materials gemessenen Durchstrahlungswerten für zumindest den ersten und den zweiten Bereich mittels der Basismaterialzerlegung unter Festlegung von mindestens einem ersten Referenzwert (B1) für ein erstes Basismaterial und einem zweiten Referenzwert (B2) für ein zweites Basismaterial, um eine erste Darstellung für die Bereiche kennzeichnend das erste Basismaterial und eine zweite Darstellung für die Bereiche kennzeichnend das zweite Basismaterial zu erhalten;

    c) Auswerten (130) der ersten Darstellung hinsichtlich einer Ausprägung eines ersten Bereichs resultierend aus der Durchstrahlung des ersten Materialbereichs und hinsichtlich einer Ausprägung eines zweiten Bereichs resultierend aus der Durchstrahlung des zweiten Materialbereichs;

    d) Auswerten (140) der zweiten Darstellung hinsichtlich der Ausprägung eines zweiten Bereichs resultierend aus der Durchstrahlung des zweiten Materialbereichs und hinsichtlich der Ausprägung eines ersten Bereichs resultierend aus der Durchstrahlung des ersten Materialbereichs; und

    e) Wiederholen (150) der Schritte b) bis d) mit variierten ersten und variierten zweiten Referenzwerten (B1', B2') zugeordnet zu anderen ersten und anderen zweiten Basismaterialen, um weitere erste und weitere zweite Darstellungen zu erhalten und auszuwerten, solange bis die Ausprägung des zweiten Bereichs in den weiteren ersten Darstellungen und/oder bis die Ausprägung des ersten Bereichs in den weiteren zweiten Darstellungen minimal oder betragsmäßig minimal ist.

2.  Verfahren (100) gemäß Anspruch 1, wobei der erste und der zweite Referenzwert (B1, B2) sowie die variierten ersten und zweiten Referenzwerte (B1', B2') jeweils eine Ordnungszahl und/oder eine effektive Ordnungszahl umfasst.

3.  Verfahren (100) gemäß Anspruch 1 oder 2, wobei das Ergebnis des Schrittes e) eine Identifikation des ersten Materialbereichs entsprechend einem ersten Basismaterial und/oder eine Identifikation des zweiten Materialbereichs entsprechend einem zweiten Basismaterial hat; und/oder wobei das Ergebnis des Schrittes e) eine Zuordnung des ersten Materials zu einem ersten Basismaterial und/oder eine Zuordnung des zweiten Materials zu einem zweiten Basismaterial hat.

4.  Verfahren (100) gemäß einem der vorherigen Ansprüche, wobei die ersten Referenzwerte (B1, B1 '), für welche die Ausprägung zugeordnet zu dem zweiten Basismaterial minimal oder betragsmäßig minimal ist, als Ergebnis ausgegeben werden, und/oder wobei die zweiten Referenzwerte (B2, B2'), für welche die Ausprägung zugeordnet zu dem ersten Basismaterial minimal oder betragsmäßig minimal ist, als Ergebnis ausgegeben werden.

5.  Verfahren (100) gemäß einem der vorherigen Ansprüche, wobei beim Auswerten (130) der ersten Darstellung und/oder der weiteren ersten Darstellungen ein Faktor ermittelt wird, der Auskunft über ein Vorliegen und/oder ein Ausprägungsgrad des Bereichs zugeordnet zu dem zweiten Basismaterial in der ersten und/oder den weiteren ersten Darstellungen gibt;

    wobei beim Auswerten (140) der zweiten Darstellung und/oder der weiteren zweiten Darstellungen ein Faktor ermittelt wird, der Auskunft über ein Vorliegen und/oder einen Ausprägungsgrad des Bereichs zugeordnet zu dem ersten Basismaterial in der zweiten und/oder den weiteren zweiten Darstellungen gibt; und wobei die ersten und zweiten Referenzwerte (B1, B2) als Ergebnis genommen werden, bei welchen die ermittelten Faktoren minimal sind.

6. Verfahren (100) gemäß einem der vorherigen Ansprüche, wobei der Verfahrensschritt e) für eine vordefinierte Vielzahl von ersten und zweiten Referenzwerten (B1, B2) wiederholt wird.

7. Verfahren (100) gemäß einem der Ansprüche 1 bis 6, wobei die n-te Wiederholung des Verfahrensschritts e) auf Basis des Ergebnisses der n-1-ten Wiederholung des Verfahrensschritts e) durchgeführt wird.

8. Verfahren (100) gemäß Anspruch 7, wobei beim Auswerten der ersten oder der weiteren ersten Darstellungen die Ausprägung zugeordnet zu dem zweiten Basismaterial mit einem Faktor von -x bis +x bewertet wird und wobei beim Auswerten der zweiten oder der weiteren zweiten Darstellungen die Ausprägung des Bereichs zugeordnet zu dem ersten Basismaterial mit einem Faktor von -y bis +y bewertet wird.

9. Verfahren (100) gemäß Anspruch 8, wobei die ersten Referenzwerte (B1) in Richtung eines Basismaterials mit einer höheren Ordnungszahl variiert werden, wenn das Vorzeichen von y negativ ist und in Richtung eines Basismaterials mit einer niedrigeren Ordnungszahl variiert werden, wenn das Vorzeichen von y positiv ist; und/oder wobei die zweiten Referenzwerte (B2) in Richtung eines Basismaterials mit einer höheren Ordnungszahl variiert werden, wenn das Vorzeichen von x negativ ist und in Richtung eines Basismaterials mit einer niedrigeren Ordnungszahl variiert werden, wenn das Vorzeichen von x positiv ist.

10. Verfahren (100) gemäß Anspruch 9, wobei der Variationsbetrag in Abhängigkeit von dem Betrag des Faktors -x, x, -y, y ist.

11. Verfahren (100) gemäß einem der vorherigen Ansprüche, wobei die Schritte a) bis e) für die weiteren zweiten Darstellungen während des Betriebs wiederholt wird, um die für die Messung verwendeten Referenzwerte (B1, B2) für das zweite Basismaterial nachzuführen.

12. Verfahren (100) gemäß einem der vorherigen Ansprüche, wobei das Verfahren des Ermittelns der Multi-Energy-Röntgen-Aufnahme des Materials vor dem Schritt a) aufweist.

13. Computerprogramm zur Durchführung eines Verfahrens (100) nach einem der vorherigen Ansprüche, wenn das Programm auf einem Computer abläuft.

14. Vorrichtung (20) zum Auswerten einer Multi-Energy-Röntgen-Aufnahme bei der Materialsortierung mittels einer Basismaterialzerlegung mit folgenden Merkmalen:

einer Schnittstelle die ausgebildet ist, um eine Multi-Energy-Röntgen-Aufnahme eins Materials, umfassend einen ersten Materialbereich zugehörig zu einem ersten Material und einen zweiten Materialbereich zugehörig zu einem zweiten Material, zu erhalten; wobei der ersten Materialbereich und der zweite ersten Materialbereich nebeneinander vorkommen, wobei in der Multi-Energy-Röntgen-Aufnahme ein erster Bereich aus der Durchstrahlung des ersten Materialbereichs resultiert und ein zweiter Bereich aus der Durchstrahlung des zweiten Materialbereichs resultiert,
einen Prozessor, der ausgebildet ist, um die Multi-Energy-Röntgen-Aufnahme mit bei der Durchstrahlung des Materials gemessenen Durchstrahlungswerten für zumindest den ersten und den zweiten Bereich mittels der Basismaterialzerlegung unter Festlegung von mindestens einem ersten Referenzwert (B1) für ein erstes Basismaterial und einem zweiten Referenzwert (B2) für ein zweites Basismaterial zu verarbeiten, um eine erste Darstellung für die Bereiche kennzeichnend das erste Basismaterial und eine zweite Darstellung für die Bereiche kennzeichnend das zweite Basismaterial zu erhalten; und um die erste Darstellung hinsichtlich einer Ausprägung eines ersten Bereichs resultierend aus der Durchstrahlung des ersten Materialbereichs und hinsichtlich einer Ausprägung eines Bereichs resultierend aus der Durchstrahlung des ersten Materialbereichs sowie die zweite Darstellung hinsichtlich der Ausprägung zweiten Bereichs resultierend aus der Durchstrahlung des zweiten Materialbereichs und hinsichtlich der Ausprägung eines ersten Bereichs resultierend aus der Durchstrahlung des ersten Materialbereichs auszuwerten;
wobei das Verarbeiten und auswerten durch den Prozessor mit variierten ersten und variierten zweiten Referenzwerten (B1', B2') zugeordnet zu anderen ersten und anderen zweiten Basismaterialen wiederholt wird, um weitere erste und weitere zweite Darstellungen zu erhalten und auszuwerten, solange bis die Ausprägung des zweiten Bereichs in den weiteren ersten Darstellungen und/oder bis die Ausprägung des ersten Bereichs in den weiteren zweiten Darstellungen minimal oder betragsmäßig minimal ist.

15. Röntgensystem (10) mit folgenden Merkmalen: einer Röntgenquelle (12), einem Röntgendetektor (14) sowie einer Vorrichtung nach Anspruch 14.

## Claims

1. A computer-implemented method (100) for evaluating a multi-energy X-ray image in material sorting by means of basis material decomposition:

   a) obtaining (110) a multi-energy X-ray image of a material including a first material area belonging to a first material and a second material area belonging to a second material; wherein the first material area and the second material area are located next to each other, wherein in the multi-energy X-ray image a first area results from the irradiation of the first material area and a second area results from the irradiation of the second material area;
   b) processing (120) the multi-energy X-ray image by irradiation values measured during irradiation of the material for at least the first and the second areas by means of the basis material decomposition while determining at least a first reference value (B1) for a first basis material and a second reference value (B2) for a second basis material to obtain a first representation for the areas characterizing the first basis material and a second representation for the areas characterizing the second basis material;
   c) evaluating (130) the first representation with respect to a manifestation of a first area resulting from the irradiation of the first material area and with respect to a manifestation of a second area resulting from the irradiation of the second material area;
   d) evaluating (140) the second representation with respect to the manifestation of a second area resulting from the irradiation of the second material area and with respect to the manifestation of a first area resulting from the irradiation of the first material area; and
   e) repeating (150) steps b) to d) with varied first and varied second reference values (B1', B2') allocated to other first and other second basis materials to obtain and evaluate further first and further second representations until the manifestation of the second area in the further first representations and/or until the manifestation of the first area in the further second representations is/are minimum or minimum regarding its amount.

2. The method (100) according to claim 1, wherein the first and second reference values (B1, B2) as well as the varied first and second reference values (B1', B2') each include a proton number and/or an effective proton number.

3. The method (100) according to claim 1 or 2, wherein the result of step e) comprises an identification of the first material area according to a first basis material and/or an identification of the second material area according to a second basis material; and/or wherein the result of step e) comprises an allocation of the first material to a first basis material and/or an allocation of the second material to a second basis material.

4. The method (100) according to any of the preceding claims, wherein the first reference values (B1, B1'), for which the manifestation allocated to the second basis material is minimal or minimal regarding its amount are output as result and/or wherein the second reference values (B2, B2') for which the manifestation allocated to the first basis material is minimum or minimum regarding its amount are output as result.

5. The method (100) according to any of the preceding claims, wherein when evaluating (130) the first representation and/or the further first representations a factor is determined giving information on an occurrence and/or a degree of manifestation of the area allocated to the second basis material in the first and/or the further first representations;

   wherein when evaluating (140) the second representation and/or the further second representations a factor is determined giving information on an occurrence and/or a degree of manifestation of the area allocated to the first basis material in the second and/or the further second representations; and
   wherein the first and second reference values (B1, B2) where the determined factors are minimum are taken as a result.

6. The method (100) according to any of the preceding claims, wherein the method step e) is repeated for a predefined plurality of first and second reference values (B1, B2).

7. The method (100) according to any of claims 1 to 6, wherein the $n^{th}$ repetition of method step e) is performed based on the result of the $n-1^{th}$ repetition of method step e).

8. The method (100) according to claim 7, wherein, when evaluating the first or the further first representations, the manifestation allocated to the second basis material is evaluated by a factor of -x to +x and wherein, when evaluating the second or the further second representations, the manifestation of the area allocated to the first basis material is evaluated by a factor of -y to +y.

9. The method (100) according to claim 8, wherein the first reference values (B1) are varied in the direction of a basis material having a higher proton number if the sign of y is negative, and are varied in the direction of a basis material having a lower proton number if the sign of y is positive; and/or wherein the second reference values (B2) are varied in the direction of a basis material having a higher proton number if the sign of x is negative, and are varied in the direction of a basis material having a lower proton number if the sign of x is positive.

10. The method (100) according to claim 9, wherein the variation amount depends on the amount of the factor -x, x, -y, y.

11. The method (100) according to any of the preceding claims, wherein steps a) to e) are repeated for the further second representations during operation in order to track the reference values (B1, B2) for the second basis material used for the measurement.

12. The method (100) according to any of the preceding claims, wherein the method comprises determining the multi-energy X-ray image of the material prior to step a).

13. A computer program for performing a method (100) according to any of the preceding claims when the program runs on a computer.

14. An apparatus (20) for evaluating a multi-energy X-ray image in material sorting by means of a basis material decomposition, comprising:

an interface configured to obtain a multi-energy X-ray image of a material including a first material area belonging to a first material and a second material area belonging to a second material; wherein the first material area and the second material area are located next to each other, wherein in the multi-energy X-ray image a first area results from the irradiation of the first material area and a second area results from the irradiation of the second material area;
a processor configured to process the multi-energy X-ray image by irradiation values measured when irradiating the material for at least the first and second areas by means of the basis material decomposition while determining at least a first reference value (B1) for a first basis material and a second reference value (B2) for a second basis material to obtain a first representation for the areas characterizing the first basis material and a second representation for the areas characterizing the second basis material; and
to evaluate the first representation with respect to a manifestation of a first area resulting from the irradiation of the first material area and with respect to a manifestation of an area resulting from the irradiation of the first material area as well as the second representation with respect to the manifestation of the second area resulting from the irradiation of the second material area and with respect to the manifestation of a first area resulting from the irradiation of the first material area;
wherein processing and evaluating by the processor is repeated with varied first and varied second reference values (B1', B2') allocated to different first and different second basis materials to obtain and evaluate further first and further second representations until the manifestation of the second area in the further first representations and/or until the manifestation of the first area in the further second representations is minimum or minimum regarding its amount.

15. An X-ray system (10), comprising:
an X-ray source (12), an X-ray detector (14) as well as an apparatus according to claim 14.

**Revendications**

1. Procédé mis en oeuvre par ordinateur (100) pour évaluer une prise de vue par rayons X multi-énergie lors du tri de matériaux au moyen d'une décomposition du matériau de base:

a) obtenir (110) une prise de vue par rayons X multi-énergie d'un matériau comportant une première zone de matériau appartenant à un premier matériau et une deuxième zone de matériau appartenant à un deuxième matériau; où la première zone de matériau et la deuxième première zone de matériau sont présentes l'une à côté de l'autre, où, dans la prise de vue par rayons X multi-énergie, une première zone résulte de l'irradiation de la première zone de matériau et une deuxième zone résulte de l'irradiation de la deuxième zone de matériau;
b) traiter (120) la prise de vue par rayons X multi-énergie avec les valeurs d'irradiation mesurées lors de l'irradiation du matériau pour au moins la première et la deuxième zone au moyen de la décomposition du matériau de base, en précisant au moins une première valeur de référence (B1) pour un premier matériau de base et une deuxième valeur de référence (B2) pour un deuxième matériau de base, pour obtenir une première représentation pour les zones caractérisant le premier matériau de base et une deuxième représentation pour les zones caractérisant le deuxième matériau de base;

c) évaluer (130) la première représentation en ce qui concerne une particularité marquée d'une première zone résultant de l'irradiation de la première zone de matériau et en ce qui concerne une particularité marquée d'une deuxième zone résultant de l'irradiation de la deuxième zone de matériau;

d) évaluer (140) la deuxième représentation en ce qui concerne la particularité marquée d'une deuxième zone résultant de l'irradiation de la deuxième zone de matériau et en ce qui concerne la particularité marquée d'une première zone résultant de l'irradiation de la première zone de matériau; et

e) répéter (150) les étapes b) à d) avec des premières et deuxièmes valeurs de référence (B1', B2') variées associées à d'autres premiers et d'autres deuxièmes matériaux de base pour obtenir et évaluer d'autres premières et d'autres deuxièmes représentations, jusqu'à ce que la particularité marquée de la deuxième zone dans les autres premières représentations et/ou jusqu'à ce que la particularité marquée de la première zone dans les autres deuxièmes représentations soit minimale ou minimale en termes de quantité.

2. Procédé (100) selon la revendication 1, dans lequel la première et la deuxième valeur de référence (B1, B2) ainsi que les premières et deuxièmes valeurs de référence (B1', B2') variées comportent, chacune, un nombre atomique et/ou un nombre atomique effectif.

3. Procédé (100) selon la revendication 1 ou 2, dans lequel le résultat de l'étape e) présente une identification de la première zone de matériau correspondant à un premier matériau de base et/ou une identification de la deuxième zone de matériau correspondant à un deuxième matériau de base; et/ou dans lequel le résultat de l'étape e) présente une association du premier matériau à un premier matériau de base et/ou une association du deuxième matériau à un deuxième matériau de base.

4. Procédé (100) selon l'une des revendications précédentes, dans lequel les premières valeurs de référence (B1, B1'), pour lesquelles la particularité marquée associée au deuxième matériau de base est minimale ou minimale en termes de quantité, sont sorties comme résultat, et/ou dans lequel les deuxièmes valeurs de référence (B2, B2'), pour lesquelles la particularité marquée associée au premier matériau de base est minimale ou minimale en termes de quantité, sont sorties comme résultat.

5. Procédé (100) selon l'une des revendications précédentes, dans lequel est déterminé, lors de l'évaluation (130) de la première représentation et/ou des autres premières représentations, un facteur qui donne une information sur une présence et/ou un degré de particularité marquée de la zone associée au deuxième matériau de base dans la première et/ou les autres premières représentations;

dans lequel est déterminé, lors de l'évaluation (140) de la deuxième représentation et/ou des autres deuxièmes représentations, un facteur qui donne une information sur une présence et/ou un degré de particularité marquée de la zone associée au premier matériau de base dans la deuxième et/ou les autres deuxièmes représentations; et dans lequel les premières et deuxièmes valeurs de référence (B1, B2) sont prises comme résultat, dans lesquels les facteurs déterminés sont minimaux.

6. Procédé (100) selon l'une des revendications précédentes, dans lequel l'étape de procédé e) est répétée pour une pluralité prédéfinie de premières et deuxièmes valeurs de référence (B1, B2).

7. Procédé (100) selon l'une des revendications 1 à 6, dans lequel la n-ième répétition de l'étape de procédé e) est effectuée sur base du résultat de la n-1-ième répétition de l'étape de procédé e).

8. Procédé (100) selon la revendication 7, dans lequel, lors de l'évaluation de la première ou des autres premières représentations, la particularité marquée associée au deuxième matériau de base est évaluée avec un facteur de -x à +x et dans lequel, lors de l'évaluation de la deuxième ou des autres deuxièmes représentations, la particularité marquée de la zone associée au premier matériau de base est évaluée avec un facteur de -y à +y.

9. Procédé (100) selon la revendication 8, dans lequel les premières valeurs de référence (B1), dans la direction d'un matériau de base avec un nombre atomique supérieur, sont variées lorsque le signe de y est négatif et, dans la direction d'un matériau de base avec un nombre atomique inférieur, sont variées lorsque le signe de y est positif; et/ou dans lequel les deuxièmes valeurs de référence (B2), dans la direction d'un matériau de base avec un nombre atomique supérieur, sont variées lorsque le signe de x est négatif et, dans la direction d'un matériau de base avec un nombre atomique inférieur, sont variées lorsque le signe de x est positif.

10. Procédé (100) selon la revendication 9, dans lequel la quantité de variation en fonction de la quantité du facteur est de -x, x, -y, y.

11. Procédé (100) selon l'une des revendications précédentes, dans lequel les étapes a) à e) sont répétées pour les autres deuxièmes représentations pendant le fonctionnement, pour suivre les valeurs de référence (B1, B2) utilisées pour la mesure pour le deuxième matériau de base.

12. Procédé (100) selon l'une des revendications précédentes, dans lequel le procédé présente le fait de déterminer la prise de vue par rayons X multi-énergie du matériau avant l'étape a).

13. Programme d'ordinateur pour la mise en oeuvre d'un procédé (100) selon l'une des revendications précédentes lorsque le programme est exécuté sur un ordinateur.

14. Dispositif (20) d'évaluation d'une prise de vue par rayons X multi-énergie lors du tri de matériau au moyen d'une décomposition de matériau de base, aux caractéristiques suivantes:

une interface qui est conçue pour obtenir une prise de vue par rayons X multi-énergie d'un matériau comportant une première zone de matériau appartenant à un premier matériau et une deuxième zone de matériau appartenant à un deuxième matériau; où la première zone de matériau et la deuxième première zone de matériau sont présentes l'une à côté de l'autre, où, dans la prise de vue par rayons X multi-énergie, une première zone résulte de l'irradiation de la première zone de matériau et une deuxième zone résulte de l'irradiation de la deuxième zone de matériau,
un processeur qui est conçu pour traiter la prise de vue par rayons X multi-énergie avec les valeurs d'irradiation mesurées lors de l'irradiation du matériau pour au moins la première et la deuxième zone au moyen de la décomposition du matériau de base, en précisant au moins une première valeur de référence (B1) pour un premier matériau de base et une deuxième valeur de référence (B2) pour un deuxième matériau de base, pour obtenir une première représentation pour les zones caractérisant le premier matériau de base et une deuxième représentation pour les zones caractérisant le deuxième matériau de base; et
pour évaluer la première représentation en ce qui concerne une particularité marquée d'une première zone résultant de l'irradiation de la première zone de matériau et en ce qui concerne une particularité marquée d'une zone résultant de l'irradiation de la première zone de matériau ainsi que la deuxième représentation en ce qui concerne la particularité marquée de la deuxième zone résultant de l'irradiation de la deuxième zone de matériau et en ce qui concerne la particularité marquée d'une première zone résultant de l'irradiation de la première zone de matériau;
dans lequel le fait de traiter et d'évaluer est répété par le processeur avec des premières valeurs de référence variées et des deuxièmes valeurs de référence variées (B1', B2') associées à d'autres premiers et d'autres deuxièmes matériaux de base, pour obtenir et évaluer d'autres premières et d'autres deuxièmes représentations jusqu'à ce que la particularité marquée de la deuxième zone dans les autres premières représentations et/ou jusqu'à ce que la particularité marquée de la première zone dans les autres deuxièmes représentations soit minimale ou minimale en termes de quantité.

15. Système à rayons X (10), aux caractéristiques suivantes:
une source de rayons X (12), un détecteur de rayons X (14) ainsi qu'un dispositif selon la revendication 14.

100

| Erhalten einer Multi-Energie-Röntgen-Aufnahme | 110 |

| Erzeugen BMD1+BMD2 | 120 |

| Analysieren BMD1 | 130 |

150

| Analysieren BMD2 | 140 |

Fig. 1

Tabelle 1

| B2 / B1 | B1    Z1 | B1 = Z1 | B1 > Z1 |
|---------|----------|---------|---------|
| B2 < Z2 | - / + | - / 0 | - / - |
| B2 = Z2 | 0 / + | 0 / 0 | 0 / - |
| B2 > Z2 | + / + | + / 0 | + / - |

# Fig. 2

EP 3 524 968 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARKUS FIRSCHING et al.** Detection of Enclosed Diamonds using Dual Energy X-ray imaging. *World Conference on Nondestructive Testing,* 20. April 2012